# EUROPEAN PATENT APPLICATION

(11) **EP 2 402 866 A1**
(43) Date of publication of application: **04.01.2012**
(21) Application number: 10305707.1
(22) Date of filing: 29.06.2010
(51) Int. Cl.: G06F 17/30

(54) **Object recommendation method and system**

(71) Applicant: France Telecom, 75015 Paris (FR)
(72) Inventor: Coupe, Patrice, 75015, Paris (FR)

(57) **Abstract**

A method for recommending an object in a communication network using a bookmark, said method comprising, for an object search engine in the communication network, the acts of indexing a bookmark created by a first user in association with search keywords comprising an identifier of the first user and an identifier of at least one second user with whom the first user wants to share the bookmark; providing to a second user, in response to a search request from said second user, a search result comprising a link usable for accessing an object linked with the bookmark.

## Description

### Field of the Invention

The present invention relates in general to communication services and more specifically to recommendation services.

### Background of the Invention

Recommendation services allow a given user to be recommended objects or items (such as e.g. contents or documents) associated with the user's interests. For example, a link or an address (such as e.g. a Uniform Resource Locator (URL)) toward a word or a document (e.g. an image or a text) or a web site in a communication network etc... may be recommended to the user in the form of a suggestion or recommendation. Some of the existing recommendation systems are used in search engines and recommend a list of key words or links that match the interest of a given user for a given object (like e.g. in Google™). These solutions may be seen as private recommendation systems for the user as the objects are recommended upon the interests of the users (i.e. the user's preferences that the user has predefined) or on estimations derived by an application or on the history of the search they have performed in the communication network (such as e.g. on the Internet). There are several drawbacks of such existing solutions. Firstly, the volume or amount of information in the communication network may be huge, implying thus that finding relevant information proves to be very difficult. In such a case, the volume is a burden for the user but also for the search engine and the corresponding indexing system that allows indexing objects in the search engine. Moreover, the relevance of a search is most of the time rated by the search engine which sometimes does not correspond to the criteria the user would apply.

Furthermore, some existing solutions for information sharing and referencing exist. For example, email based sharing brings the benefit of using the mutual trust sender and recipient can have in each other, but email based sharing inherits the drawback of email, which are mainly the volume of information to exchange in the communication network and the difficulty of search using emails. Browser-based bookmarking solutions exist, but prove to be too difficult to use when managing large amount of items such as e.g. links. Moreover, social network based bookmarking solutions exist, but does not integrate person to person communication.

In the existing solution described in the international patent application WO/2000/067159, both private and public bookmarks are stored in a database, but they cannot target a specific user or group of users, especially not when performing a search using a search engine.

Today there is no solution to efficiently recommend personal bookmarks that allows improving efficiency of such communication systems.

Today there is a need for a bookmark recommendation solution that can be easily implemented on the existing communication infrastructures.

### Summary of Invention

It is an object of the present system to overcome disadvantages and/or make improvement over the prior art.

To that extend, the invention proposes a method for recommending an object in a communication network using a bookmark, said method comprising, for a search engine in the communication network, the acts of:
- indexing a bookmark created by a first user in association with search keywords comprising an identifier of the first user and an identifier of at least one second user with whom the first user wants to share the bookmark,
- providing to a second user, in response to a search request from said second user, a search result comprising a link usable for accessing an object linked with the bookmark.

An advantage of the method according to the invention is that efficient searches are enabled based on bookmarks shared between users. Bookmarks comprise links toward objects that have been found by a first user and that may further be provided to a second user for a later search of objects in the communication network by the second user.

Another advantage of the present invention is that the bookmark(s) indexed by the search engine are chosen or validated by a first user for a second user, whereby this first user may be a known contact of the second user. Hence, a higher level of relevance may be achieved compared to existing automated search engine of the art.

Another advantage of the present invention is the volume efficiency. Indeed, only user identifiers associated with bookmark(s) chosen or validated by the first user need be stored, instead of storing and indexing all available information.

Another advantage of the present invention is the simplicity as the second user is provided with bookmark(s) while using his search engine.

The invention also proposes a method according to claim 2. An advantage is that the second user may input search criteria to perform a search using a search engine, such as the user identifier of any user (third user).

The invention also proposes a method according to claim 3. An advantage of indexing and using a key word such as a criterion such as a time or a date or a time interval is that it allows providing bookmarks associated with time, date or time interval may be provided to the second user, who is not bound to use only user identifier or words, but may also perform a search request based on additional temporal information for being provided with the corresponding received bookmark(s).

The invention also proposes a method according to claim 4. An advantage is that the second user may perform a search and obtain bookmarks associated with said first or second user (i.e. linking toward a/a plurality given object(s) found by a first user or a plurality of first users) by performing a search using the identifier of the first or second user as a search criterion. This allows displaying bookmarks recommended to the second user by respectively only the first user or by all the other users when performing a search using its own identifier e.g. like using or browsing an account.

The invention also proposes a device according to claim 5 providing similar advantages as those of the associated method.

The invention also proposes an object search engine according to claim 9 providing similar advantages as those of the associated method.

The invention also proposes a server according to claim 10 providing similar advantages as those of the associated method.

The invention also proposes a system according to claim 11 providing similar advantages as those of the associated method and device or server.

The invention also proposes a readable computer program according to claim 12 providing similar advantages as those of the associated method.

### Brief Description of the Drawings

Embodiments of the present invention will now be described solely by way of example and only with reference to the accompanying drawings, where like parts are provided with corresponding reference numerals, and in which:
Figure 1 schematically illustrates a system according to an embodiment of the present invention;
Figure 2 schematically illustrates a system according to an embodiment of the present invention;
Figure 3 schematically illustrates a method according to an embodiment of the present invention;
Figure 4 schematically illustrates a method according to an embodiment of the present invention.

### Description of Preferred Embodiments

The following are descriptions of exemplary embodiments that when taken in conjunction with the drawings will demonstrate the above noted features and advantages, and introduce further ones. In the following description, for purposes of explanation rather than limitation, specific details are set forth such as architecture, interfaces, techniques, devices etc..., for illustration. However, it will be apparent to those of ordinary skill in the art that other embodiments that depart from these details would still be understood to be within the scope of the appended claims. Moreover, for the purpose of clarity, detailed descriptions of well-known devices, systems, and methods are omitted so as not to obscure the description of the present system. Furthermore, routers, servers, nodes, gateways or other entities in a communication network are not detailed as their implementation is beyond the scope of the present system and method. Unless specified otherwise, the exemplary embodiment will be described hereafter in its application to a base station of a wireless communication network. In addition, it should be expressly understood that the drawings are included for illustrative purposes and do not represent the scope of the present system. In the following description, a device may be a network equipment (such as e.g. a server, a gateway...) or a user equipment (such as e.g. a fixed user equipment (e.g. a computer, a television etc...), a mobile user equipment (e.g. a mobile phone, a Personal Digital Assistant, a laptop etc...)).

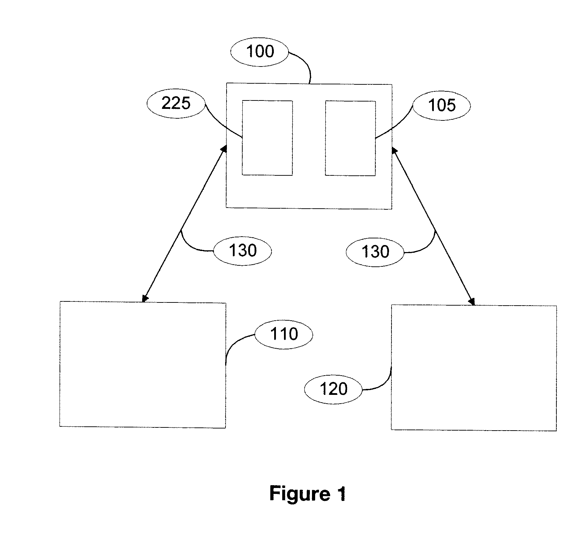

Figure 1 describes an illustrative embodiment of the system according to the invention. In the system according to the invention, a plurality of users (110, 120...) may communicate with one or a plurality of device(s) 100 in a communication network 130. The system according to the invention may be for example an autonomous system within a private communication network (such as e.g. an intranet) or for instance part of a public communication network such as for example the Internet. The device 100 may comprise a database 105 that allows storing bookmarks and an object search engine unit 225 for searching objects in the communication network 130 using search keywords as search criteria. An object or item is a resource stored in an entity of the communication network 130. An object in the communication network 130 may be of any type, such as for example a document, a content, a website, an address, a file, a video, etc... An address of the object or a link to the object may be used in order to access the object in the communication network 130. A bookmark may be defined as an identification element such as e.g. a link or an address to identify or point to a given object accessible in the communication network 130. There may be any number of users, but, for the sake of clarity, the system and method according to the invention are further described here under using a first user 110 and a second user 120, wherein the first user 110 recommends one or a plurality of objects to the second user 120 using bookmarks. In an illustrative embodiment of the method and system according to the invention, the notion of user may be generalized to cover groups of users. Recommendations of objects may be performed using bookmark(s) by a first user 110 to one or a plurality of users e.g. in a list of the first user's contacts. Similarly, recommendations of objects may be performed using bookmark(s) to a second user 120 by one or a plurality of users e.g. known from the second user in a list of the second user's contacts.

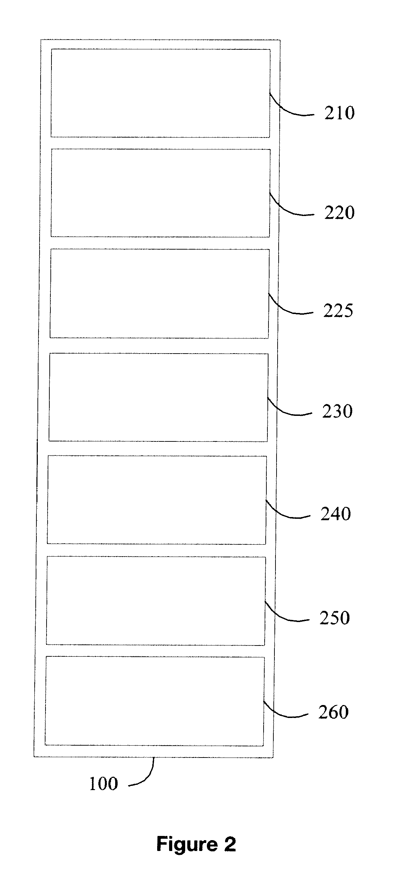

Figure 2 describes an illustrative embodiment of the system according to the invention, wherein the system comprises a plurality of units. The different units may be located on separate entities communicating with each other using existing information transfer protocols. For the sake of efficiency, some subsystems may be deployed on the same equipment or same hardware. In an illustrative embodiment of the system according to the invention, wherein the system and device according to the invention are deployed on a large scale, each unit may be implemented to be scalable, i.e. with multiple instances and virtualized, as made possible using existing "cloud computing" technologies.

In an illustrative embodiment of the system according to the invention, all the units described here under are located on the same device 100 as different software modules communicating with each other. However, this is in no way limiting the scope of the present invention as, as described here above, the units may also be distributed over a plurality of devices or equipments or entities.

In an illustrative embodiment of the system according to the invention, the system may comprise a receiving unit 210 for receiving bookmark(s) or indexes associated with bookmarks from a first user 110.

In an illustrative embodiment of the system according to the invention, the system may comprise a storing unit 220 which comprises a database 105 for storing bookmarks. Objects pointed by stored bookmarks may also be stored in database 105 or stored in another location in the communication network 130. The storing unit 220 allows managing the database 105 in order for the database 105 to store, classify, retrieve or provide bookmarks. For example, a given bookmark associated with a first user 110 identifier or a second user 120 identifier may be provided when the second user 120 requests the device 100 to display the bookmarks associated with the first user 110 identifier or the second user 120 identifier.

In an illustrative embodiment of the system according to the invention, the system may comprise an object search engine unit 225. An index associated with the bookmark may be used for referencing the bookmark with an object search engine. The search engine unit 225 may be embedded or coupled with the device 100 so that said a bookmark, stored in database 105 or in another database, may be further provided or displayed in response to a search request performed with the object search engine unit 225 using search criteria associated with said bookmark. After a bookmark, which points to a given object in the communication network 130, has been created by a first user 110, a correspondence or relationship between this bookmark and search keyword(s) may be generated. For example, such a correspondence or relationship may be created using indexes as known in existing methods for search engines. Indexes may be for instance words, numbers (a time, a date) or references that are stored in association with a given bookmark so that when a user uses key words (like words (e.g. user identifiers), time, date etc...) as search criteria to define a search in the search engine unit 225, the search engine unit 225 may derive the index(es) that corresponds to said given search keywords so that the search engine unit 225 may further provide the list of bookmarks that are associated with these search criteria (e.g. identifiers, time, date...) to the user. Indexes may be created for a given bookmark based on search keyword(s) associated with said bookmark. Indexes may also be keywords that may be further used as search criteria by a user during a search. The search engine unit 225 may be configured to create and allow storing of indexes based on given keywords, then configured to derive, in response to a search request comprising given search keyword(s) as search criteria, indexes associated with said search keywords and to provide the corresponding bookmark(s). A user interface may be provided by the search engine unit 225 to a user so that said user may further provide search keywords as search criteria for performing a search. In an illustrative embodiment of the system according to the invention, a user interface may be provided for defining a search criterion of the search request using an identifier of a user, said search criterion indicating that said identifier of said user is to be matched with an attribute of an indexed bookmark. Search keywords may comprise an identifier of a first user 110 and an identifier of at least one second user 120 with whom the first user wants to share the bookmark. For example, when the second user 120 searches for an object O using given search keywords as search criteria in the object search engine unit 225, the object search engine unit 225 may derive index(es) for instance for the search keywords (first user 110, second user 120, object O) and provide the bookmark(s) associated with these indexes. In an illustrative embodiment of the system according to the invention, a user interface may be provided for defining a search criterion of the search request using an identifier of a third user, said search criterion indicating that said identifier of said third user is to be matched with an attribute of an indexed bookmark. The search engine unit 225 may obtain indexes stored in the database 105 and/or in other databases located in the communication network 130. In an illustrative embodiment of the system according to the invention, the object search engine 225 may allow the second user 120 to search for objects that are stored in the database 105 and on the Internet. In other words, object search engine 225 may allow simultaneously performing a search in the database 105 or/and another database and/or an Internet search (for example, a Google™ engine may be embedded into the object search engine 225) so that the results of the search in a plurality of databases may be provided to the second user 120 (by the providing unit 230 described here under). In an illustrative embodiment of the system according to the invention, the object search engine 225 may store and manage bookmark index(es) of the object search engine for the first user 110 and the second user 120, leaving the indexing/storage/management of the object itself to another search engine, like e.g. Google™.

In an illustrative embodiment of the system according to the invention, the system may comprise a providing unit 230 for providing bookmarks associated with objects recommended by a first user 110 to a second user 120. In other words, a second user 120 may be provided, in response to a search request from said second user, with a search result comprising a bookmark or a link usable for accessing an object linked with the bookmark. The bookmark(s) matching the search entries may be provided along with, for example, results for the same entries outputted from another search engine (like e.g. Google™).

In an illustrative embodiment of the system according to the invention, the system may comprise an indexing unit 240. The indexing unit 240 allows indexing a bookmark created by a first user in association with search keywords comprising for instance an identifier of the first user and an identifier of at least one second user with whom the first user wants to share the bookmark. The indexing unit 240 may be coupled and/or managed by the search engine unit 225. The indexing unit 240 may rely on existing indexing techniques for object O. In an illustrative embodiment of the system according to the invention, index pointers for a given bookmark may be associated with search keywords like e.g. (first user 110, second user 120, object O).

In an illustrative embodiment of the system according to the invention, the system may comprise a user authentication unit 250, which may be:
- located on the device 100,
- located on another device (within or outside the communication network 130),
- located on a user equipment and on network equipment 100 (such as the device 100 or a server in the communication network 130 or another server outside the communication network 130), as for instance in the existing Universal Subscriber Identity Module (USIM) based authentication mechanisms.

In an illustrative embodiment of the system according to the invention, the system may comprise a user management unit 260, which may be:
- located on the device 100,
- located on another device.

The user management unit 260 allows providing a user interface for defining a search criterion of the search request using an identifier of a third user, said search criterion indicating that said identifier of said third user is to be matched with an attribute of an indexed bookmark.

The user management unit 260 allows, when a bookmark created by a first user has been indexed in association with search keywords comprising a date or a time or a time interval, providing a user interface for defining a search criterion of the search request using one of a date or time or time interval, said search criterion indicating that said one of a date or time or time interval is to be matched with an attribute of an indexed bookmark.

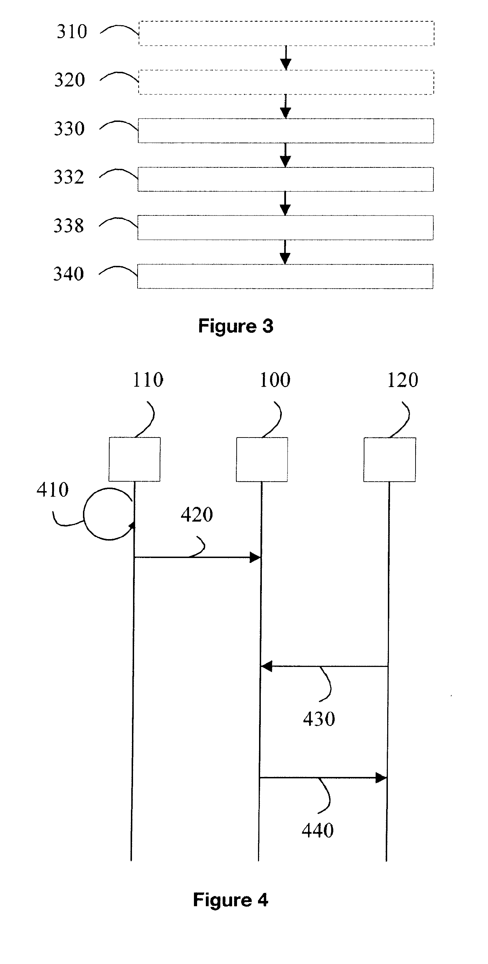

Figure 3 describes an illustrative embodiment of the method according to the invention, which allows for recommending an object in a communication network 130 using a bookmark. The bookmark comprises a link toward the object such as e.g. an address or a URL. The method according to the invention may be performed by a device 100, located in the communication network 130, and comprising or being coupled with an object search engine 225, an indexing unit 240 and a database 105.

In an illustrative embodiment of the method according to the invention, in a preliminary act 310, the device 100 or the object search engine 225 may receive a bookmark from a first user 110. This bookmark may comprise keywords such as e.g. an identifier of the first user 110 and an identifier of a second user 120. The bookmark may then be stored, in a preliminary act 320, in the database 105 or e.g. a register or table of the object search engine 225.

In an act 330, the bookmark, created by the first user, may be indexed in (e.g. a register of) the object search engine 225 or the database 105 or in another database. In other words, at least one index associated with the bookmark may be created in association or correspondence or relationship with keywords comprising e.g. an identifier of the first user 110 and an identifier of at least one second user 120 with whom the first user wants to share the bookmark. In an illustrative embodiment of the method according to the invention, the act of indexing may further comprise indexing a bookmark created by a first user in association with search keywords comprising a time or a date.

A second user 120 may define a search, in an act 332, using a user interface provided by the search engine unit 225 and search keywords as search criteria. In an illustrative embodiment of the method according to the invention, the method further comprises the act of providing a user interface for defining a search criterion of the search request using an identifier of a third user, said search criterion indicating that said identifier of said third user is to be matched with an attribute of an indexed bookmark. For example, a search request may be defined by the second user 120 by entering or providing given search keywords into the user interface. The search request may comprise one or a plurality of search criteria. For example, the search request may comprise one or a plurality of search keywords or the search request may comprise options or rules for defining and performing a specific search such as e.g. search keyword 1 AND (search keyword 2 OR search keyword 3) as known in existing search engines. The search request is made by the user to the search engine unit 225 via the user interface and the search is performed in an act 338 by the search engine unit 225. In an illustrative embodiment of the method according to the invention, the search request may be performed using the identifier of a first user 110 as a search keyword and/or a second user 120 as a search keyword. In an illustrative embodiment of the method according to the invention, the search request performed by the second user 120 may be a search request to the object search engine unit 225 or to an external search engine coupled with the search engine unit 225.

The search may be performed by the search engine unit 225, as described here above in reference to Figure 2: the search engine unit 225 may first derive index(es) using one, several or all of the search keywords provided by the user via the user interface. Then, the search engine unit 225 may retrieve and provide the list of bookmark(s) associated with said index(es).

In an act 340, the second user 120 may be provided, in response to a search request from said second user 120 in act 332, with a search result comprising a link usable for accessing the object(s) linked with the bookmark. The provision of the bookmark(s) may be performed for example by further display on a display screen of a user equipment 100 of the second user 120. In an illustrative embodiment of the method according to the invention, the method may further comprise an act of providing a user interface for defining a search criterion of the search request using an identifier of a third user, said search criterion indicating that said identifier of said third user is to be matched with an attribute of an indexed bookmark.

In an illustrative embodiment of the method according to the invention, the act of indexing may further comprise indexing a bookmark created by a first user in association with search keywords comprising a date or a time or a time interval, and the method may further comprise an act of providing a user interface for defining a search criterion of the search request using one of a date or time or time interval, said search criterion indicating that said one of a date or time or time interval is to be matched with an attribute of an indexed bookmark.

In an illustrative embodiment of the method according to the invention, the act of providing 340 may be performed in response to a connection of the second user 120 to the device 100 or the object search engine 225 which then automatically provide the bookmark(s) indexed in association with an identifier of the second user 120. In illustrative embodiments of the method according to the invention, the act 340 of providing the bookmark may be performed either in push mode or pull mode, either by the device 100 or by the second user 120. In an illustrative embodiment of the method according to the invention, a command may be sent by the second user 120 to the device 100 to willingly or voluntarily retrieve the bookmark(s) that comprise(s) an identifier of the second user. In an illustrative embodiment of the method according to the invention, the method may be performed using any type of multimodal keyword input. In an illustrative embodiment of the method according to the invention, the method may further comprises, prior to the act of providing, an act of sending a message (for example to the second user 120). This message may comprise:
- an indication that a bookmark comprising an identifier of the second user 120 has been stored in the database 105 or the object search engine 225 and is ready to be provided by the device 100 or the object search engine 225. For instance, the second user 120 may receive a message or indication that another user (e.g. the first user 110) has bookmarked some content so that one or a plurality of bookmarks have been stored in the database 105 of the device 100 for the second user 120;
- the bookmark comprising an identifier of the second user 120.

The result of the search may be filtered or classified upon options chosen by the user in the search request as in existing solutions. In an illustrative embodiment of the method according to the invention, the method may further comprise, prior to the act of providing, an act of filtering the search result using the identifier of the first user or the identifier of the at least one second user.

In an illustrative embodiment of the method according to the invention, the device 100 may be for instance a server 100 comprising a database 105. As for example, a first user 110 consults information or content in the communication network 130, the first user 110 may detect or find an object O which the first user 110 thinks may be relevant to a second user 120. The first user 110 may then bookmark the content, i.e. create or obtain a link toward the object O in the communication network 130. The associated bookmark, which comprises the link toward the object O, may then be provided to the server 100 which receives it in act 310 for further storing, in an act 320, in the database 105 as a bookmark and/or an bookmark index associated with the second user 120 (i.e. the recipient). The second user 120 may then communicate with the server 100 using a request in order to further be provided, in act 330, with the bookmark(s) that other users have provided to the server 100 with the second user 120 as the recipient (like e.g. the bookmark stored by the first user 110 for object O). For instance, the server 100 may provide said bookmark(s) upon connection of the second user 120 to the server 100, or upon sending of a command for provision of said bookmark(s) to the server 100, or as a result when the second user 120 performs a search using the object search unit 225 and for the indexed bookmark(s) that is/are relevant to said search, potentially providing said result along with other results which are not associated with the bookmark(s) obtained from the object search engine 225 or an external object search engine.

Figure 4 describes an illustrative embodiment of the method according to the invention, wherein the device 100 is a server. In an act 410, a first user 110 authenticates to the server 100. The first user 110, after having navigated, for instance thanks to an internet browser, through various objects in the communication network 130, may want to bookmark (i.e. indicate or point toward) a given object O to a second user 120. The corresponding bookmark is then received by the device 100 in an act 420 and one or several index(es) associated for example with search keywords (first user 110, second user 120, C) may be generated by and stored entirely or partly in the storing unit 210 or the object search unit 225. For example, user identifiers and indexed bookmarks may be stored in the database 105 of the storing unit 210 while indexes may be stored in the object search unit 225. This index(es) may be generating using known method and may be associated for instance with:
- an identifier of the user 110, shared with the authentication and user management units of the user that has detected the information;
- an identifier of the second user 120, shared with the user authentication unit 250 and the user management unit 260 of the user meant to be the recipient of the bookmark (i.e. the second user 120);
- an identifier of the bookmark to the object O;
- the time T when the entry E(first user 110, second user 120, O) was generated;
- an extensive copy of the object O;
- an extract of the object O;
- meta-information related to the object O if available;
- etc...

In an act 430, a second user 120 may authenticate to the system and search for some object, for instance thanks to a list of search keywords (K1, ..., Km) using the object search engine unit 225. These search keywords may be communicated via a user interface to the object search engine unit 225 which performs a search by deriving indexes associated with said search keywords and providing the corresponding bookmarks stored in the database 105 or another database or in the search engine unit 225. In particular, the search keywords where the second user 120 has been identified as recipient of bookmark(s) sent by a first user 110 may be selected. This search may be efficiently performed by the object search engine unit 225 when an index has been built, managed and maintained using an indexing unit 240 as described here above. The results R of the search with keywords K1...Km given by the search engine may be structured, and given to the providing unit 230 which may display the results of the search.

In an act 440, the results may be provided to the second user 120. For example, the bookmark(s) may be displayed to the second user 120 using e.g. an interface and a display screen.

In an illustrative embodiment of the method according to the invention, K1...Km may also be communicated to external search engines, which may be commonly accessible through Application Programing Interfaces (APIs). The providing unit 230 may then combine R with the results obtained from said external search engines.

A method for recommending an object in a communication network using a bookmark, said method comprising an act of providing a user interface for defining a search criteria indicating a user identifier as a value to be searched in search keywords of indexed bookmarks comprising an identifier of a user having created a bookmark.

A method for recommending an object in a communication network using a bookmark, said method comprising an act of providing a user interface for defining a search criteria indicating a user identifier as a value to be searched in search keywords of indexed bookmarks comprising an identifier of a user with whom a bookmark is shared.

## Claims

1. A method for recommending an object in a communication network using a bookmark, said method comprising, for an object search engine in the communication network, the acts of:
- indexing a bookmark created by a first user in association with search keywords comprising an identifier of the first user and an identifier of at least one second user with whom the first user wants to share the bookmark,
- providing to a second user, in response to a search request from said second user, a search result comprising a link usable for accessing an object linked with the bookmark.

2. A method according to claim 1, said method further comprising an act of providing a user interface for defining a search criterion of the search request using an identifier of a third user, said search criterion indicating that said identifier of said third user is to be matched with an attribute of an indexed bookmark.

3. A method according to any of the preceding claims, wherein the act of indexing further comprises indexing a bookmark created by a first user in association with search keywords comprising a date or a time or a time interval, said method further comprising, an act of providing a user interface for defining a search criterion of the search request using one of a date or time or time interval, said search criterion indicating that said one of a date or time or time interval is to be matched with an attribute of an indexed bookmark.

4. A method according to any of the preceding claims, said method further comprising, prior to the act of providing, an act of filtering the search result using the identifier of the first user or the identifier of the at least one second user.

5. A device for recommending an object in a communication network using a bookmark, said device, being coupled with an object search engine unit in the communication network, comprising:
- an indexing unit for indexing a bookmark created by a first user in association with search keywords comprising an identifier of the first user and an identifier of at least one second user with whom the first user wants to share the bookmark,
- a providing unit for providing to a second user, in response to a search request from said second user to the search engine unit, a search result comprising a link usable for accessing an object linked with the bookmark.

6. A device according to claim 5, said device further comprising an user interface unit for providing a user interface for defining a search criterion of the search request using an identifier of a third user, said search criterion indicating that said identifier of said third user is to be matched with an attribute of an indexed bookmark.

7. A device according to any of the preceding claims 5 to 6, wherein the indexing unit is further configured to index a bookmark created by a first user in association with search keywords comprising a date or a time or a time interval, said device further comprising a user management unit for providing a user interface for defining a search criterion of the search request using one of a date or time or time interval, said search criterion indicating that said one of a date or time or time interval is to be matched with an attribute of an indexed bookmark.

8. A device according to any of the preceding claims 5 to 7, wherein the providing unit further comprises means for filtering the search result using the identifier of the first user or the identifier of the at least one second user.

9. An object search engine for recommending an object in a communication network using a bookmark, said object search engine in the communication network comprising:
- an indexing unit for indexing a bookmark created by a first user in association with search keywords comprising an identifier of the first user and an identifier of at least one second user with whom the first user wants to share the bookmark,
- a providing unit for providing to a second user, in response to a search request from said second user, a search result comprising a link usable for accessing an object linked with the bookmark.

10. A server for recommending an object in a communication network using a bookmark, said server comprising, for an object search engine in the communication network:
- an indexing unit for indexing a bookmark created by a first user in association with search keywords comprising an identifier of the first user and an identifier of at least one second user with whom the first user wants to share the bookmark,
- a providing unit for providing to a second user, in response to a search request from said second user, a search result comprising a link usable for accessing an object linked with the bookmark.

11. A system for recommending an object in a communication network using a bookmark, said system comprising
- a communication network,
- an object search engine unit in the communication network in the communication network, comprising:
- an indexing unit for indexing a bookmark created by a first user in association with search keywords comprising an identifier of the first user and an identifier of at least one second user with whom the first user wants to share the bookmark,
- an providing unit for providing to a second user, in response to a search request from said second user, a search result comprising a link usable for accessing an object linked with the bookmark.

12. A computer-readable medium having computer-executable instructions to enable a computer system to perform the method of any one of claims 1 to 4.
